# EUROPÄISCHE PATENTANMELDUNG

(11) **EP 3 517 924 A1**
(43) Veröffentlichungstag der Anmeldung: **31.07.2019**
(21) Anmeldenummer: 19151381.1
(22) Anmeldetag: 11.01.2019
(51) Int. Cl.: G01M 15/02, G01M 15/06, G01M 13/02

(54) **ZUSTANDSÜBERWACHUNG DES KURBELTRIEBS BEI EINEM VERBRENNUNGSMOTOR**

(30) Priorität: 29.01.2018 DE 102018101940
(71) Anmelder: MAN Truck & Bus SE, 80995 München (DE)
(72) Erfinder: Schmidt, Christopher, 90768 Fürth (DE)
(74) Vertreter: v. Bezold & Partner Patentanwälte - PartG mbB

(57) **Zusammenfassung**

Die Erfindung betrifft ein Verfahren zum Erkennen einer Veränderung am Betriebsverhalten eines Kurbeltriebs (1) eines Kraftfahrzeugs, insbesondere zum Erkennen von Rissen im Kurbeltrieb oder eines Lagerverschleißes. Der Kurbeltrieb umfasst dabei eine Kurbelwelle (2), einen im Betrieb der Kurbelwelle (2) rotierenden Impulsgeber (3) und eine ortsfeste magnetische Sensoreinrichtung (4), welche ein von der Drehzahl des Impulsgebers (3) und dem Abstand des Impulsgebers (3) von der Sensoreinrichtung (4) abhängiges Signal S erzeugt. Das Verfahren beinhaltet im Einzelnen folgende Schritte: Erfassen eines aktuellen Signals Sₐₖₜ der Sensoreinrichtung (4) während des Betriebs des Kurbeltriebs (1), Vergleichen des aktuellen Signals Sₐₖₜ mit einem in einem Speicher (5) hinterlegten Referenzsignal S_{ref} der Sensoreinrichtung (4), das in einem Referenzzustand des Kurbeltriebs (1) bestimmt wurde, und Erkennen einer Veränderung am Betriebsverhalten des Kurbeltriebs (1), insbesondere von Rissen im Kurbeltrieb (1) oder einem Lagerverschleißes, aus dem Vergleich des aktuellen Signals Sₐₖₜ mit dem Referenzsignal S_{ref}. Ferner betrifft die Erfindung ein Fahrzeug, insbesondere Nutzfahrzeug, aufweisend eine Steuereinrichtung (6), die eingerichtet ist, ein derartiges Verfahren auszuführen.

## Beschreibung

Die Erfindung betrifft ein Verfahren zum Erkennen einer Veränderung am Betriebsverhalten eines Kurbeltriebs eines Kraftfahrzeugs, insbesondere zum Erkennen von Rissen im Kurbeltrieb oder eines Lagerverschleißes. Ferner betrifft die Erfindung ein Fahrzeug, insbesondere Nutzfahrzeug, aufweisend eine Steuereinrichtung, die eingerichtet ist, ein derartiges Verfahren auszuführen.

Während des Betriebs des Verbrennungsmotors im Kraftfahrzeug ist der Kurbeltrieb, insbesondere die Kurbelwelle, hohen Biege- und Torsionsbelastungen ausgesetzt. Darüber hinaus werden die Bauteile und Lager durch Drehschwingungen beansprucht, die aus dem ständigen stoßweisen Beschleunigen und Abbremsen der Drehbewegung des Kurbeltriebs resultieren. Um einen Ausfall des Fahrzeugs durch einen Motorschaden zu verhindern, ist es wünschenswert einen Verschleiß des Kurbeltriebs, insbesondere Risse, Änderungen am Rundlauf oder der Einbaulage möglichst frühzeitig zu erkennen.

Aus der DE 195 45 008 A1 ist zur Früherkennung von Veränderungen bei periodisch arbeitenden Maschinen bekannt, ein maschinenspezifisches Messsignal, beispielsweise das Drehzahlsignal, in einer Auswerteeinheit mittels einer Ordnungsanalyse zu verarbeiten. Dabei wird das Messsignal durch Fouriertransformation in ein Spektrum aus mehreren Frequenzen umgewandelt und die Amplitudenabweichung ausgewählter Frequenzen von einem im fehlerfreien Betriebszustand ermittelten Referenzspektrum analysiert. Aus diesem Vergleich kann auf eventuell vorhandene Störungs- oder Fehlzustände der Maschine geschlossen werden. Nachteilig daran ist allerdings, dass die erfassten Messsignale hierfür aufwendig nachbearbeitet werden müssen. Zudem werden mit diesem Verfahren vor allem Veränderungen am Schwingungsverhalten und weniger Lageveränderungen der Bauteile detektiert.

Die Aufgabe der Erfindung ist deshalb, ein im Vergleich zum Stand der Technik verbessertes Verfahren zum Erkennen von Veränderung am Betriebsverhalten eines Kurbeltriebs eines Kraftfahrzeugs, insbesondere zum Erkennen von Rissen im Kurbeltrieb oder eines Lagerverschleißes, bereitzustellen. Insbesondere liegt der Erfindung die Aufgabe zugrunde, ein einfacher zu realisierendes Verfahren zur Kurbeltriebüberwachung bereitzustellen, das weniger Rechenoperationen benötigt.

Diese Aufgaben werden durch ein Verfahren mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Ein Grundgedanke der Erfindung ist, das "Rohsignal" der Sensoreinrichtung eines in den meisten Fahrzeugen vorhandenen magnetischen Drehzahlgebers zu nutzen, um damit den Kurbeltrieb zu überwachen. Üblicherweise wird die Sensoreinrichtung dazu eingesetzt, um mittels Auswertung der regelmäßigen Magnetflussänderung durch einen Impulsgeber, beispielsweise einer am Schwungrad angebrachten Lochscheibe, die Drehzahl des Kurbeltriebs zu ermitteln. Erfindungsgemäß lässt sich die Rohsignalamplitude der Sensoreinrichtung jedoch auch dazu verwendet, um Abweichungen des Schwungrads beziehungsweise des Impulsgebers aus dessen Solllage zu detektieren. Da die Signalamplitude der Sensoreinrichtung sensibel auf Lageveränderungen, insbesondere auf Veränderungen des radialen und axialen Abstands zwischen Impulsgeber und Sensoreinrichtung reagiert, lässt sich aus dem Vergleich mit einem Referenzsignal des intakten Kurbeltriebs ein Haupt- und Passlagerverschleiß oder ein Riss im Kurbeltrieb erkennen. Zur besseren Detektion derartiger Veränderungen am Betriebsverhalten des Kurbeltriebs umfasst der Grundgedanke der Erfindung zudem auch den Aspekt einer leichten Signalaufbereitung des Rohsignals im Form einer zeitlichen Mittelung und/oder Filterung. Diese erfolgt allerdings nur soweit, dass auch nach der Signalaufbereitung weiterhin die Abstandsinformation zwischen Impulsgeber und Sensoreinrichtung im Signal codiert ist.

Erfindungsgemäß wird ein Verfahren zum Erkennen einer Veränderung am Betriebsverhalten eines Kurbeltriebs eines Kraftfahrzeugs, insbesondere zum Erkennen von Rissen im Kurbeltrieb oder eines Lagerverschleißes bereitgestellt. Als Betriebsverhalten, welches insbesondere das drehzahlabhängige Schwingungs-, Lage- und Resonanzverhalten eines Kurbeltriebs mit z. B. Kurbelwelle, Lager, Pleuel, Kolben, Ringen, Bolzen, Schwingungsdämpfer und Schwungräder, umfasst, kann die Art und Weise verstanden werden, wie ein Kurbeltrieb unter vorgegebenen Bedingungen (z. B. Drehzahl) arbeitet. Ferner umfasst der Kurbeltrieb eine Kurbelwelle, einen im Betrieb der Kurbelwelle rotierenden Impulsgeber und eine ortsfeste magnetische Sensoreinrichtung, welche ein von der Drehzahl des Impulsgebers und dem Abstand des Impulsgebers von der Sensoreinrichtung abhängiges Signal S erzeugt, wobei das Signal S vom radialen und/oder axialen Abstand (in Bezug zur Drehachse der Kurbelwelle) des Impulsgebers von der Sensoreinrichtung abhängig sein kann. Vorzugsweise handelt es sich hierbei um ein induziertes Spannungssignal.

Impulsgeber als auch magnetische Sensoren sind an sich im Stand der Technik bekannt. So können als magnetische Sensoren induktive, oszillatorisch-induktive, magneto-resistive, Wirbelstromsensoren und Hall-Effekt-Sensoren für das anspruchsgemäße Verfahren verwendet werden, welche allesamt auf einer berührungslosen Detektion einer Veränderung des magnetischen Flusses am Ort der Sensoreinrichtung durch die Bewegung des Impulsgebers beruhen. Der Impulsgeber hat die Aufgabe, den magnetischen Sensor im Betrieb des Kurbeltriebs zu beeinflussen, und kann beispielsweise als Zahnrad, Geberrad oder Lochscheibe ausgebildet sein. Allerdings können auch beliebig weitere Strukturen verwendet werden, welche in einem festen Verhältnis zur Kurbelwelle rotieren und zumindest abschnittsweise über einen, insbesondere umfangseitigen, Bereich in Form eines Loches, eines Vorsprungs, einer Nut oder einen Bereich unterschiedlicher Magnetisierung verfügen. Werden diese Strukturen an der Sensoreinrichtung vorbeigeführt, so kann der magnetische Fluss am Ort der Sensoreinrichtung verändert werden, und es kann ein Signal S erzeugt werden, das von der Geschwindigkeit, mit der die Struktur an der Sensoreinrichtung vorbeigeführt wird, und dem Abstand dieser Struktur von der Sensoreinrichtung abhängig ist. Ist vorgesehen sowohl Informationen über die axiale als auch radiale Abstandskomponente zwischen Sensor und Impulsgeber zu detektieren, kann dies jedoch - je nach Einbaulage der Sensoreinrichtung - die Verwendung spezieller Geometrien des Impulsgebers bedingen. Beispielsweise ist zur Detektion axialer Lageveränderungen am Kurbeltrieb bei einer radialen Einbauposition der Sensoreinrichtung ein Impulsgeber mit axialer Strukturierung z.B. in Form einer Lochspur nötig.

Gemäß einem ersten allgemeinen Gesichtspunkt der Erfindung umfasst das Verfahren dabei folgende Schritte:
Während des Betriebs des Kurbeltriebs wird ein aktuelles Signal Sₐₖₜ der Sensoreinrichtung, vorzugsweise mit einer hohen Abtastrate, erfasst, wobei aus dem aktuellen Signals Sₐₖₜ der Sensoreinrichtung ein Maß für den aktuellen, vorzugsweise mittleren, Abstand zwischen Impulsgeber und Sensoreinrichtung ableitbar ist. Beispielsweise kann das in der Sensoreinrichtung induzierte analoge Spannungssignal verwendet werden, dessen Amplitude mit dem Impulsgeber-Sensorabstand korreliert. Dieses aktuelle Signal Sₐₖₜ wird mit einem in einem Speicher hinterlegten Referenzsignal S_{ref} der Sensoreinrichtung, das in einem Referenzzustand des Kurbeltriebs bestimmt wurde, verglichen und aus dem Vergleich des aktuellen Signals Sₐₖₜ mit dem Referenzsignal S_{ref} werden Veränderung am Betriebsverhalten des Kurbeltriebs, insbesondere Risse im Kurbeltrieb oder einen Lagerverschleiß, erkannt. Sowohl Sₐₖₜ als auch S_{ref} können dabei mehrere Signalwerte einer informationstragenden Größe umfassen. Sₐₖₜ und S_{ref} können analoge oder digitale Signalwerte umfassen. Sₐₖₜ und S_{ref} können eine Funktion der Zeit und/oder der Drehzahl der Kurbelwelle und/oder einer weiteren physikalischen Größe sein. Der Referenzzustand kann ein durch einen bestimmten Betriebszustand des Kurbeltriebs charakterisierter Zustand sein, der durch das von der Einbaulage und der Drehzahl abhängige Schwingungs- und/oder Lage- und/oder Resonanzverhalten des Kurbeltriebs gekennzeichnet wird. Beispielsweise kann es sich bei dem Referenzzustand um einen intakten Kurbeltrieb handeln, alternativ kann für eine gezielte Fehlerdiagnose jedoch auch ein bestimmter Fehlzustand des Kurbeltriebs, beispielsweise eine Kurbelwelle mit Riss, verwendet werden. Durch das Bestimmen des Referenzsignals S_{ref} in einem Referenzzustand des Kurbeltriebs kann der von der Drehzahl und Schwingungen des Kurbeltriebs abhängige Abstand zwischen Impulsgeber und ortsfesten Sensor in S_{ref} codiert werden. Treten während des weiteren Betriebs Veränderungen am Kurbeltrieb auf, so kann dies zu einem veränderten Schwingungs-, Lage-und Resonanzverhalten des Kurbeltriebs führen, was wiederum zu einem veränderten drehzahlabhängigen mittleren Abstand zwischen Impulsgeber und Sensor und damit zu einem veränderten Sensorsignal S führen kann. Der Vergleich des aktuellen Signals Sₐₖₜ mit dem Referenzsignal S_{ref} entspricht daher im Wesentlichen einer Überprüfung des aktuellen drehzahlabhängigen Abstands zwischen Sensoreinrichtung und Impulsgeber mit deren drehzahlabhängigen Abstand im Referenzzustand. Durch den Vergleich des aktuellen Signals Sₐₖₜ mit dem Referenzsignals S_{ref} können so auch kleine Veränderungen am Kurbeltrieb, insbesondere Veränderungen am Abstand zwischen Sensoreinrichtung und Impulsgeber, sensitiv erfasst werden. Das Vergleichen der Signale kann durch Differenz- oder Quotientenbildung oder einer anderen aus dem Bereich der Signalauswertung bekannten Methode erfolgen.

Zwar wird das Verfahren gezielt zum Erkennen von Veränderungen am Betriebsverhalten eines Kurbeltriebs beschrieben, jedoch kann das Prinzip auch zum Erkennen von Veränderungen am Betriebsverhalten der Nocken-, Antriebs- oder beliebiger anderen Welle verwendet werden, wenn der Impulsgeber entsprechend an die Nocken-, Antriebs- oder sonstige Welle gekoppelt ist. Der besondere Vorteil beim Überwachen des Kurbeltriebs liegt darin, dass für die meisten Kraftfahrzeuge eine derartige Anordnung der einzelnen Komponenten, d. h. Impulsgeber und Sensoreinrichtung, zur Drehzahlmessung bereits am Kurbeltrieb vorhanden ist.

Nach einer Ausführungsform der Erfindung handelt es sich bei dem von der Sensoreinrichtung erzeugten Signal S um ein Spannungssignal, vorzugsweise um ein analoges Spannungssignal. Insbesondere kann es sich bei dem Spannungssignal um ein bei der Sensoreinrichtung durch des sich dort aufgrund der Bewegung des Impulsgebers verändernden magnetischen Flusses induziertes Spannungssignal handeln. Vorteilhaft daran ist, dass keine weitere Signalaufbereitung oder Signalkonvertierung stattfinden muss und damit direkt das "Rohsignal" des Sensors, im dem die Informationen über den Sensor-Impulsgeberabstand codiert sind, zur Kurbeltriebüberwachung verwendet werden kann. Insbesondere handelt es sich bei dem Spannungssignal gerade nicht um ein Drehzahlsignal, welches sich aus der Auswertung der Anzahl der vom rotierenden Impulsgeber erzeugten Signalimpulse pro Zeiteinheit ergeben würde.

Eine Weiterentwicklung der Ausführung sieht vor, dass zum Vergleichen der Signale aus dem erfassten aktuellen Signal Sₐₖₜ der Sensoreinrichtung ein zeitlich gemitteltes maximales Spannungssignal oder ein zeitlich gemittelter Betrag des Spannungssignals ermittelt wird. Insbesondere kann aus dem erfassten aktuellen Signal Sₐₖₜ der Sensoreinrichtung eine positive maximale Spannungsamplitude oder eine negative maximale Spannungsamplitude ermittelt werden. Dies ist vorteilhaft, da durch die zeitliche Mittelung der aufgrund der Drehbewegung des Impulsgebers oszillierenden Spannungsamplitude ein quasi-stationärer Effektivwert ermittelt werden kann, welcher eine bessere Vergleichsgröße als das schwankende Rohsignal darstellt. Zudem können so auch Signalschwankungen aufgrund von Schwingungen des Kurbeltriebs/Impulsgebers herausgemittelt werden, wodurch wiederum ein verlässlicheres Vergleichen möglich ist. Wird aus dem erfassten aktuellen Signal Sₐₖₜ der Sensoreinrichtung ein zeitlich gemitteltes maximales Spannungssignal oder ein zeitlich gemittelter Betrag des Spannungssignals ermittelt, so wird für den Signalvergleich vorzugsweise auch das Referenzsignal derselben Signalverarbeitung unterzogen.

Nach einer Ausführungsform der Erfindung wird zum Vergleichen der Signale das erfasste aktuelle Signal Sₐₖₜ der Sensoreinrichtung einer Filterung unterzogen. Dies kann beispielsweise in Form einer Tiefpass- und/oder Ordnungsfilterung erfolgen. Vorzugsweise erfolgt die Filterung derart, dass die hochfrequenten Signalanteile der einzelnen Zähne und/oder Löcher des rotierenden Impulsgebers, die zur Drehzahlbestimmung beispielsweise oft mit einer 60erTeilung angebracht sind, eliminiert werden und nur die niederfrequenten Signalanteile, welche Lageabweichungen (z. B. Taumeln) des Kurbeltriebs anzeigen, detektiert werden. Der Vorteil daran ist, dass so Lageabweichungen des Kurbeltriebs zuverlässiger und genauer erfasst werden können. Allerdings ist es für das Verfahren entscheidend, dass die Filterung nur derart erfolgt, dass auch nach der Filterung aus dem aktuellen Signal Sₐₖₜ ein Maß für den aktuellen mittleren Abstand zwischen Impulsgeber und Sensoreinrichtung ableitbar ist, d.h. die zu detektierende Abstandsinformation auch weiterhin im Signal codiert ist. Wird das erfasste aktuelle Signal Sₐₖₜ der Sensoreinrichtung einer Filterung unterzogen so wird für den Signalvergleich vorzugsweise auch das Referenzsignal derselben Filterung unterzogen.

Nach einem Aspekt der Erfindung lässt sich basierend auf dem Vergleich des aktuellen Signals Sₐₖₜ mit dem Referenzsignal S_{ref} gezielt eine Abweichung des aktuellen Abstands zwischen Impulsgeber und Sensoreinrichtung von einem Abstand zwischen Impulsgeber und Sensoreinrichtung in einem Referenzzustand des Kurbeltriebs erkennen. Vorzugsweise handelt es sich dabei um einen mittleren Abstand. Das Erkennen einer Abweichung ist möglich, da in dem von der Sensoreinrichtung erzeugtem Signal S der Abstand zwischen Impulsgeber und Sensoreinrichtung, beispielsweise in Form einer Spannungsamplitude, codiert ist und damit aus der Veränderung des Signals S eine Veränderung des Abstands dieser Bauteile abgeleitet werden kann.

Nach einem weiteren Aspekt der Erfindung lässt sich basierend auf dem Vergleich des aktuellen Signals Sₐₖₜ mit dem Referenzsignal S_{ref} gezielt ein Riss im Kurbeltrieb oder ein Lagerverschleiß erkennen.

Gemäß einer weiteren Ausführungsform wird aus dem erfassten aktuellen Signal Sₐₖₜ der Sensoreinrichtung zusätzlich eine Drehzahl der Kurbelwelle ermittelt. Dadurch kann die magnetische Sensoreinrichtung eine Doppelfunktion einnehmen. Einerseits kann durch das von ihr erfasste Signal auf mögliche Veränderungen am Betriebsverhalten des Kurbeltriebs geschlossen werden, andererseits kann die Sensoreinrichtung als Drehzahlgeber verwendet werden. Dies hat den Vorteil, dass durch das Verwenden nur einer einzigen Einrichtung, die beide Funktionen erfüllt, Bauraum eingespart werden kann. Zudem kann das Verfahren ohne große Umbaumaßnahmen bei Fahrzeugen ohne eine Kurbeltriebüberwachung nachgerüstet werden, da nur eine Modifikation am sowieso meist vorhandenen Drehzahlgeber nötig ist. Hierbei sei nochmals erwähnt, dass es sich bei dem erfassten aktuellen Signal Sₐₖₜ der Sensoreinrichtung, das vom beanspruchten Verfahren zum Erkennen von Veränderungen am Betriebsverhalten des Kurbeltriebs verwendet wird, um eine Art "Rohsignal" der Sensoreinrichtung, insbesondere um ein Spannungssignal, handeln kann, aus welchem sich allerdings auch Informationen über die Drehzahl ermitteln lassen. Beispielsweise kann es sich um eine durch die Bewegung des Impulsgebers regelmäßig induzierte Spannung handeln. Zur Überwachung des Kurbeltriebs kann hierzu die Signalamplitude des Spannungssignals, welche besonders auf den Abstand zwischen Sensoreinrichtung und Impulsgeber und damit auf das drehzahlabhängige Schwingungs-, Lage- und Resonanzverhalten des Kurbeltriebs sensitiv ist, verwendet werden, während aus dem pro Zeiteinheit erfassten durch den Impulsgeber induzierten Spannungspulsen eine Drehzahlsignal ermittelt wird.

Nach einer Ausführungsform der Erfindung ist das Referenzsignal S_{ref} der Sensoreinrichtung im Speicher als Funktion der Drehzahl der Kurbelwelle und/oder des Drehmoments der Kurbelwelle hinterlegt. Das Referenzsignal S_{ref} kann dabei für diskrete Drehzahlwerte und/oder Drehmomentwerte hinterlegt sein. Das Referenzsignal S_{ref} kann für einen bestimmten Drehzahlbereich oder mehrere Drehzahlbereiche und/oder einen bestimmten Drehmomentbereich oder mehrere Drehmomentbereiche im Speicher hinterlegt sein. Insbesondere kann S_{ref} für Drehzahlen im Bereich von 0 bis höchstens 10000 U/min hinterlegt sein. Hierbei erfolgt das Vergleichen in dieser Ausführungsform dadurch, dass ein bei einer bestimmten Drehzahl und/oder Drehmoment der Kurbelwelle erfasster Signalwert des aktuellen Signals Sₐₖₜ mit einem Referenzsignalwert der entsprechenden Drehzahl und/oder des entsprechenden Drehmoments verglichen wird. Beispielsweise kann aus dem aktuellen Signal Sₐₖₜ für jeden Signalwert des aktuellen Signals Sₐₖₜ eine Drehzahl der Kurbelwelle ermittelt werden, bei der dieser Signalwert erfasst wurde, und mit einem zu diesem Drehzahlwert gehörigen Referenzsignalwert verglichen werden. Im Speicher kann hierzu eine eindeutige Zuordnung zwischen einem Drehzahlwert und/oder Drehmomentwert und einem Referenzsignalwert hinterlegt sein. Falls außerdem zum Vergleichen das aktuelle Signal Sₐₖₜ einer Signalverarbeitung unterzogen wurde, insbesondere einer zeitlichen Mittelung, so können das Referenzsignal oder die Referenzsignalwerte ebenfalls einer entsprechend angepassten Signalverarbeitung unterzogen werden oder unterzogen worden sein, um die Vergleichbarkeit der Signale zu gewährleisten.

Eine Weiterentwicklung der Ausführung sieht vor, dass das aktuelle Signal Sₐₖₜ der Sensoreinrichtung als Funktion der Drehzahl der Kurbelwelle und/oder des Drehmoments der Kurbelwelle erfasst wird. Dies kann dabei für bestimmte diskrete Drehzahlwerte und/oder Drehmomentwerte erfolgen. Die Erfassung des aktuellen Signals Sₐₖₜ der Sensoreinrichtung kann für einen bestimmten Drehzahlbereich oder mehrere Drehzahlbereiche und/oder einen bestimmten Drehmomentbereich oder mehrere Drehmomentbereiche erfolgen. Insbesondere kann dies für Drehzahlen im Bereich von 0 bis höchstens 10000 U/min erfolgen. Da aufgrund von Resonanzeffekten die Auswirkungen von möglichen Veränderungen am Betriebsverhalten des Kurbeltriebs bei verschiedenen Drehzahlen unterschiedlich stark bemerkbar sind, kann das Erfassen mehrerer Signale bei verschiedenen Drehzahlen die Zuverlässigkeit und Genauigkeit erhöhen, mit der Veränderungen am Kurbeltrieb erfasst werden können. Das Erfassen des aktuellen Signals Sₐₖₜ der Sensoreinrichtung als Funktion der Drehzahl und/oder der Kurbelwelle kann dabei nacheinander für verschiedene Drehzahlen und/oder Drehmomente erfolgen. Das heißt, dass das aktuelle Signal Sₐₖₜ der Sensoreinrichtung zunächst für nur eine Drehzahl und/oder ein Drehmoment erfasst, mit dem dieser Drehzahl und/oder Drehmoment entsprechenden Referenzsignal verglichen und eine mögliche Veränderung am Betriebsverhalten des Kurbeltriebs erkannt wird und anschließend das Verfahren erneut bei einer weiteren Drehzahl und/oder einem weiteren Drehmoment wiederholt wird. Alternativ kann auch das aktuelle Signal Sₐₖₜ zunächst für mehrere Drehzahlwerte und/oder Drehmomentwerte erfasst werden und anschließend die weiteren Verfahrensschritte mit diesem Signal durchgeführt werden.

Nach einer Ausführungsform der Erfindung erfolgt der Vergleich des aktuellen Signals Sₐₖₜ der Sensoreinrichtung mit dem in dem Speicher hinterlegten Referenzsignal S_{ref} der Sensoreinrichtung durch Bilden einer betragsmäßigen Differenz der beiden Signale ΔS=|Sₐₖₜ - S_{ref}|. Falls die betragsmäßige Differenz der beiden Signale ΔS einen ersten Schwellenwert SW₁ übersteigt, wird eine erste Meldung ausgegeben. Der erste Schwellenwert kann dabei fest vorgegeben oder veränderlich sein. Beispielsweise kann der erste Schwellenwert vom Hersteller für eine bestimmte Kombination aus Sensoreinrichtung und Impulsgeber und/oder für einen bestimmten Kurbelwellentyp vorgegeben werden. Die erste Meldung kann ein optisches und/oder akustisches Signal umfassen. Die erste Meldung kann zudem zeitlich andauern, bis die Veränderung am Betriebsverhalten des Kurbeltriebs behoben ist, oder in regelmäßigen zeitlich begrenzten Abständen auftreten. Die erste Meldung kann auch in elektronischer Form, beispielsweise als digitaler Eintrag in einem Fehlerspeicher des Kraftfahrzeugs, erfolgen. Die erste Meldung kann zudem einen Hinweis geben, dass ein Fehlzustand des Kurbeltriebs, insbesondere ein Riss im Kurbeltrieb oder eines Lagerverschleiß, vorliegt. Die erste Meldung kann einen Hinweis geben, dass ein derartiger Fehlzustand droht, allerdings keine umgehende Reparatur des Kurbeltriebs erforderlich ist. Die erste Meldung kann auch einen Hinweis geben, dass eine umgehende Reparatur des Kurbeltriebs erforderlich ist. Alternativ kann die erste Meldung auch ausgegeben werden, falls die betragsmäßige Differenz der beiden Signale ΔS=|Sₐₖₜ - S_{ref}| den ersten Schwellenwert SW₁ unterschreitet. Dies kann vor allem dann der Fall sein, falls es sich bei dem Referenzzustand um einen bestimmten Fehlzustand handelt und eine Meldung ausgegeben werden soll, falls dieser auftritt. Vorteilhaft an dieser Methode ist, dass das Bilden der betragsmäßigen Differenz der Signale und der anschließende Vergleich sowohl soft- als auch hardwareseitig einfach zu implementieren ist.

Gemäß einer Weiterentwicklung wird eine zweite Meldung ausgegeben, falls die betragsmäßige Differenz der beiden Signale ΔS einen zweiten Schwellenwert SW₂ übersteigt, wobei SW₂ > SW₁ gilt. Analog zum ersten Schwellenwert kann auch der zweite Schwellenwert fest vorgegeben oder veränderlich sein. Dabei kann auch der zweite Schwellenwert vom Hersteller für eine bestimmte Kombination aus Sensoreinrichtung und Impulsgeber und/oder für einen bestimmten Kurbelwellentyp vorgegeben werden. Die zweite Meldung kann ferner ein optisches und/oder akustisches Signal umfassen. Die zweite Meldung kann zeitlich andauern, bis die Veränderung am Betriebsverhalten des Kurbeltriebs behoben ist, oder in regelmäßigen zeitlich begrenzten Abständen auftreten. Die zweite Meldung kann in elektronischer Form, beispielsweise als digitaler Eintrag in einem Fehlerspeicher des Kraftfahrzeugs, erfolgen. Die zweite Meldung kann zudem einen Hinweis geben, dass ein Fehlzustand des Kurbeltriebs, insbesondere ein Riss im Kurbeltrieb oder eines Lagerverschleißes, vorliegt. Die zweite Meldung kann einen Hinweis geben, dass ein derartiger Fehlzustand droht, allerdings keine umgehende Reparatur des Kurbeltriebs erforderlich ist. Die zweite Meldung kann auch einen Hinweis geben, dass eine umgehende Reparatur des Kurbeltriebs erforderlich ist. Alternativ kann die erste Meldung auch ausgegeben werden, falls die betragsmäßige Differenz der beiden Signale ΔS=|Sₐₖₜ - S_{ref}| den zweiten Schwellenwert SW₂ unterschreitet. Dies kann wiederum vor allem dann der Fall sein, falls es sich bei dem Referenzzustand um einen bestimmten Fehlzustand handelt. Im Zuge einer weiteren Verallgemeinerung können auch weitere Schwellenwerte SWₙ vorgegeben werden und bei einem Überschreiten dieser Schwellenwerte wiederum entsprechende Meldungen ausgegeben werden, wodurch auf vorteilhafte Weise ein mehrstufiges Warnverfahren bereitgestellt werden kann.

Gemäß einer weiteren Weiterbildung gibt die zweite Meldung einen Hinweis, dass aufgrund eines Fehlzustands des Kurbeltriebs, insbesondere aufgrund eines Risses im Kurbeltrieb oder eines Lagerverschleißes, eine umgehende Reparatur des Kurbeltriebs erforderlich ist, und die erste Meldung gibt einen Hinweis, dass ein derartiger Fehlzustand droht, allerdings keine umgehende Reparatur des Kurbeltriebs erforderlich ist. Dadurch kann ein zweistufiges Warnverfahren bereitgestellt werden, das einen Nutzer eines Fahrzeugs zunächst vorwarnt, dass in naher Zukunft ein zu erwartender Fehlzustand des Kurbeltriebs auftreten könnte und daraus Schäden entstehen könnten, was dem Nutzer Zeit verschafft, entsprechende Vorkehrungen für diesen Fall zu treffen.

Eine weitere Ausführungsform sieht vor, dass das Referenzsignal S_{ref} der Sensoreinrichtung für ein bestimmtes Kraftfahrzeug ermittelt und im Speicher als fahrzeugspezifisches Referenzsignal S_{ref} hinterlegt wird. Da sich die erzeugte Signalform und Signalamplitude aufgrund von Fertigungstoleranzen und/oder Variationen der Einbaulage bei jedem Fahrzeug leicht unterscheiden können, wird durch die Verwendung eines fahrzeugspezifisches Referenzsignals S_{ref} die Zuverlässigkeit und Genauigkeit erhöht, mit der Veränderungen am Kurbeltrieb erfasst werden können. Hierzu kann für einen bestimmten Referenzzustand des Kurbeltriebs, insbesondere dessen Neuzustand, eines spezielles Kraftfahrzeugs eine drehzahlabhängige Messung des von der Sensoreinrichtung erzeugten Signals erfolgen, beispielsweise nach der Montage des Kraftfahrzeugs, allerdings vor dessen Inbetriebnahme. Dieses Signal, welches das drehzahlabhängige Schwingungs-, Lage- und Resonanzverhalten des Kurbeltriebs in der Einbaugeometrie für dieses spezielle Kraftfahrzeug enthält, kann dann als Referenzsignal für dieses spezielle Fahrzeug gespeichert werden.

Alternativ kann es sich bei dem Referenzsignal S_{ref} der Sensoreinrichtung um ein fahrzeugunspezifisches Referenzsignal S_{ref} der Sensoreinrichtung handeln. Im Fall, dass sich die Einbaulage des Kurbeltriebs, der Sensoreinrichtung und des Impulsgebers für verschiedene Kraftfahrzeuge kaum unterscheidet, beispielsweise für Fahrzeuge desselben Modells oder derselben Reihe, kann so auf ein aufwändiges Bestimmen eines fahrzeugspezifischen Referenzsignals S_{ref} verzichtet werden. Beispielsweise kann zunächst für ein Kraftfahrzeug das Signal der Sensoreinrichtung in einem Referenzzustand des Kurbeltriebs, vorzugsweise drehzahlabhängig, ermittelt werden und dieses Signal als Referenzsignal für weitere Fahrzeuge desselben Modells verwendet werden.

Gemäß einer Ausführungsform wird das Verfahren zum Erkennen einer Veränderung am Betriebsverhalten eines Kurbeltriebs in regelmäßigen Zeitabständen und/oder bei bestimmten Kilometerständen durchgeführt. Die so ermittelten aktuellen Signale Sₐₖₜ der Sensoreinrichtung werden dabei als Trenddaten in einem Speicher gespeichert und auf Anfrage von einem Nutzer ausgegeben. Als Trenddaten werden dabei Daten verstanden, die durch denselben Messprozess ermittelt und anschließend denselben Verfahrensschritten unterzogen wurden, allerdings zu unterschiedlichen Zeitpunkten erfasst werden. Dies ermöglicht ein direktes Vergleichen der Daten, um systematische Effekte, beispielsweise einen kontinuierlichen Verschleiß des Kurbeltriebs, leicht zu erkennen. Vorzugsweise kann somit aus diesen Trenddaten ermittelt werden, ob es sich bei einem Fehlzustand des Kurbeltriebs um einen plötzlichen und damit unerwarteten Schaden oder einen betriebsbedingten und damit absehbaren Verschleiß des Kurbeltriebs handelt. Die Zeitabstände können gleichmäßig und damit periodisch sein oder einer bestimmten Ordnung, jedoch ohne eine feste Periodizität, folgen. Beispielsweise kann der Zeitabstand ein halbes Jahr betragen. Ebenso kann das Durchführen des Verfahrens bei bestimmten Kilometerständen in festen Abständen, beispielsweise alle 5000 km, erfolgen oder gemäß einer bestimmten Ordnung, jedoch ohne eine feste Periodizität, erfolgen. Beispielsweise kann der Kilometerabstand bis zum erneuten Durchführen des Verfahrens mit zunehmendem Kilometerstand des Fahrzeugs verkleinert werden, um so einen aufgrund der hohen Laufleistung wahrscheinlicher werdenden Fehlzustand zuverlässiger zu erkennen. Die Trenddaten können dem Nutzer optisch und/oder akustisch ausgegeben werden. Ferner können die Trenddaten dem Nutzer in elektronischer Form, insbesondere digitale Daten, bereitgestellt werden.

Nach einer Ausführungsform der Erfindung handelt es sich bei dem Referenzzustand des Kurbeltriebs um einen Neuzustand des Kurbeltriebs kurz nach der Montage des Kurbeltriebs, insbesondere nach der Montage der Sensoreinrichtung und des Impulsgebers, im Kraftfahrzeug. Dies hat den Vorteil, dass der Kurbeltrieb in diesem Zustand keine Verschleißerscheinungen aufweist und somit verschleißbedingte Veränderungen während des Betriebs gut erkannt werden können. Die Angabe "kurz nach der Montage des Kurbeltriebs" ist dabei so zu verstehen, dass keine weiteren fertigungsbedingten Veränderungen an der Einbaulage des Kurbeltriebs, insbesondere an der Position der Sensoreinrichtung und Impulsgeber, vorgenommen werden, allerdings eine Inbetriebnahme des Fahrzeugs noch nicht erfolgt ist. "Kurz nach der Montage des Kurbeltriebs" kann einen Zeitraum bis zu einer Laufleistung des Fahrzeugs von 50 km umfassen.

Alternativ handelt es sich bei dem Referenzzustand um einen Zustand des Kurbeltriebs kurz nach einer Wartung oder Reparatur des Kurbeltriebs. Da die bei der Wartung oder Reparatur möglicherweise vorgenommenen Modifikationen am Kurbeltrieb zu Veränderungen des Abstands zwischen Sensoreinrichtung und Impulsgeber oder des drehzahlabhängigen Schwingungs-, Lage- und Resonanzverhaltens des Kurbeltriebs führen können, ist es vorteilhaft, eine Neukalibration des Referenzzustands durchzuführen, um so Fehldiagnosen oder Fehlmeldungen zu vermeiden. Beispielsweise kann hierzu nach der Wartung oder Reparatur des Kurbeltriebs das aktuelle Signal der Sensoreinrichtung drehzahlabhängig erfasst und als neues Referenzsignal im Speicher abgelegt werden. Auch in diesem Fall ist die Angabe "kurz nach einer Wartung oder Reparatur des Kurbeltriebs" so zu verstehen, dass keine weiteren wartungs-oder reparaturbedingten Veränderungen an der Einbaulage des Kurbeltriebs, insbesondere an der Position der Sensoreinrichtung und Impulsgeber, vorgenommen werden, allerdings eine erneute Inbetriebnahme des Fahrzeugs noch nicht erfolgt ist.

Alternativ handelt es sich bei dem Referenzzustand um einen Fehlzustand oder Verschleißzustand des Kurbeltriebs, insbesondere um einen Kurbeltrieb mit einem Riss in der Kurbelwelle. Dies hat den Vorteil, dass, falls verschiedene Fehl- oder Verschleißzustände des Kurbeltriebs zu einem für den jeweiligen Fehl- oder Verschleißzustand charakteristischen drehzahlabhängigen Schwingungs-, Lage- und Resonanzverhalten des Kurbeltriebs führen, diese Fehlzustände oder Verschleißzustände auch als Referenzzustände verwendet werden können, um so eine gezielte Fehlerdiagnose durchzuführen. Zudem können auch mehrere Referenzzustände des Kurbeltriebs im Speicher hinterlegt sein und der Vergleich entsprechend für die mehreren hinterlegten Referenzzustände durchgeführt werden.

Die Erfindung betrifft ferner ein Kraftfahrzeug, insbesondere Nutzfahrzeug, mit einem Kurbeltrieb, umfassend eine Kurbelwelle, einen im Betrieb der Kurbelwelle rotierenden Impulsgeber und eine ortsfeste induktive Sensoreinrichtung, die ein von der Drehzahl des Impulsgebers und dem Abstand des Impulsgebers von der Sensoreinrichtung abhängiges Signal S erzeugt, und eine Steuereinrichtung, die eingerichtet ist, die Signale der Sensoreinrichtung zu empfangen, und ein Verfahren zum Erkennen einer Veränderung am Betriebsverhalten eines Kurbeltriebs, wie in diesem Dokument beschrieben, auszuführen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigen:
- Figur 1: eine schematische Darstellung eines Kurbeltriebs mit einem Impulsgeber und Sensoreinrichtung;
- Figur 2: ein Verfahren zum Erkennen einer Veränderung am Betriebsverhalten eines Kurbeltriebs eines Kraftfahrzeugs gemäß einer Ausführungsform der Erfindung;
- Figur 3: ein Vergleichen des aktuelle Signals Sₐₖₜ mit einem Referenzsignal S_{ref} der Sensoreinrichtung gemäß einer Ausführungsform der Erfindung;
- Figur 4: ein Vergleichen eines zeitlich gemittelten maximalen Spannungssignals Uₘₐₓ der Sensoreinrichtung mit einem Referenzspannungssignal U_{ref} gemäß einer weiteren Ausführungsform der Erfindung; und
- Figur 5: ein von einer induktiver Sensoreinrichtung erzeugtes Spannungssignal als Funktion der Zeit bei verschiedenen Drehzahlen der Kurbelwelle.

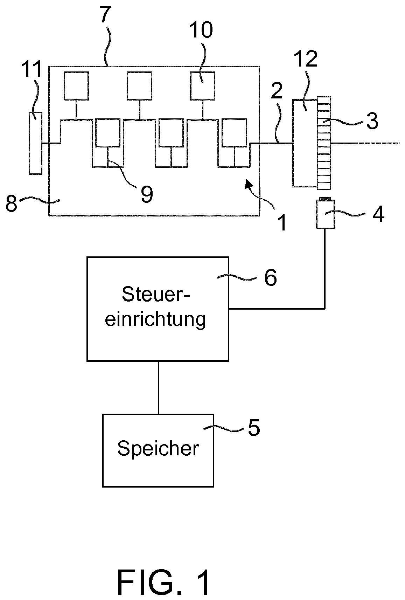

Figur 1 zeigt schematisch einen an sich bekannten Kurbeltrieb 1 eines Kraftfahrzeugs, insbesondere eines Nutzfahrzeugs. Der Kurbeltrieb 1 umfasst eine Kurbelwelle 2, welche Teil eines schematisch nur als Motorblock 7 dargestellten Verbrennungsmotors 8 ist, sowie mehrere mit der Kurbelwelle 2 gekoppelte Pleuel 9 und Kolben 10. Ferner umfasst der Kurbeltrieb 1 wie auch der Verbrennungsmotor 8 weitere Bauteile, die gemäß der üblichen Praxis verwendet werden, insbesondere Gegengewichte, Kurbelwellenlager, Dichtungen, Zylinder, Einspritzsystem etc., ohne dass diese explizit in Figur 1 darstellt sind. Die Kurbelwelle 2 ist innerhalb des Motorblocks 7 angeordnet und beidseitig herausgeführt. An einem aus dem Motorblock 7 herausgeführten Ende der Kurbelwelle 2 ist ein Torsionsschwingungsdämpfer 11 vorgesehen. An einem diesem Ende gegenüberliegenden Ende der Kurbelwelle 2 umfasst der Kurbeltrieb 1 ein Schwungrad 12, beispielsweise ein Zweimassenschwungrad, mit einem als Geberrad ausgeführten Impulsgeber 3. Das Geberrad weist hierbei umfangseitig äquidistante Winkelmarkierungen auf, welche als Löcher oder Vorsprünge ausgeführt sein können. Benachbart zum Geberrad - in der vorliegenden Ausführungsform radial, wobei auch eine axiale Einbauposition möglich wäre - ist eine magnetische Sensoreinrichtung 4, beispielsweise eine induktive Sensoreinrichtung, vorgesehen, die geeignet ist, ein von der Drehzahl des Impulsgebers 3 sowie dem Abstand zwischen Sensoreinrichtung 4 und Impulsgeber 3 abhängiges Signal S zu erzeugen. Insbesondere handelt es sich bei diesem Signal S um ein Spannungssignal, das bei der Sensoreinrichtung 4 aufgrund des sich dort durch die Bewegung des Impulsgebers 3 verändernden magnetischen Flusses induziert wird. Zusätzlich kann aus dem erfassten Signal S der Sensoreinrichtung 4 eine Drehzahl der Kurbelwelle 2 ermittelt werden. Hierzu kann zwischen dem Abstand der Winkelmarkierungen auf dem Geberrad und der entsprechenden Kurbelwellenumdrehung ein fester Zusammenhang bestehen, wodurch aus dem Erfassen der Winkelmarkierungen pro Zeiteinheit die Drehzahl der Kurbelwelle 2 ermittelt werden kann. Um auf Betriebsveränderungen des Kurbeltriebs 1 zu schließen, wird beim beanspruchten Verfahren allerdings vorzugsweise das "Rohsignal" der magnetischen Sensoreinrichtung 4, insbesondere das Spannungssignal, und nicht das mittels derselben Sensoreinrichtung 4 ermittelte, allerdings aufbereitete Drehzahlsignal verwendet. In der in Figur 1 dargestellten Ausführungsform wird das von der Sensoreinrichtung 4 erfasste Signal S einer Steuereinrichtung 6 bereitgestellt. Ferner ist die Steuereinrichtung 6 mit einem Speicher 5 verbunden, auf dem ein Referenzsignal S_{ref} der Sensoreinrichtung 4 hinterlegt ist.

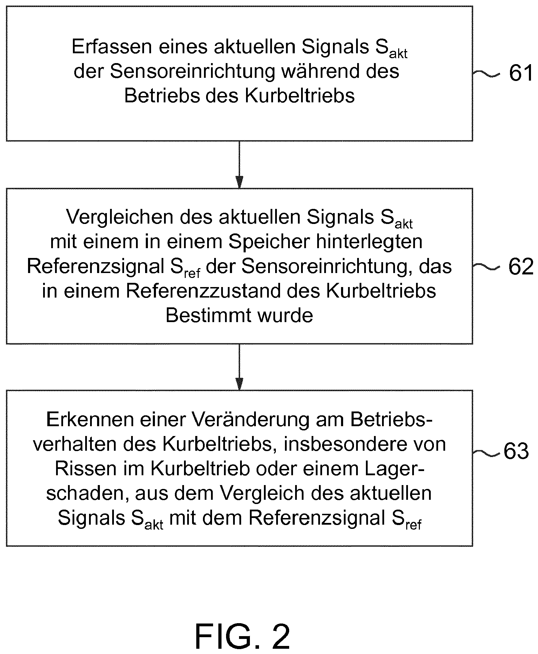

In Figur 2 zeigt ein Flussdiagramm eines Verfahrens zum Erkennen einer Veränderung am Betriebsverhalten eines Kurbeltriebs 2 eines Kraftfahrzeugs gemäß einer Ausführungsform der Erfindung. In Schritt 61 wird ein aktuelles Signal Sₐₖₜ der magnetischen Sensoreinrichtung 4 während des Betriebs des Kurbeltriebs 1 erfasst. Beispielsweise kann es sich bei dem aktuellen Signal Sₐₖₜ der Sensoreinrichtung 4 um ein Spannungssignal handeln, insbesondere um ein analoges Spannungssignal, das bei der Sensoreinrichtung 4 aufgrund des sich dort durch die Bewegung des Impulsgebers 3 verändernden magnetischen Flusses induziert wird. In Schritt 62 wird das aktuelle Signal Sₐₖₜ der Sensoreinrichtung 4 mit einem in einem Speicher 5 hinterlegten Referenzsignal S_{ref} der Sensoreinrichtung 4 verglichen, wobei das Referenzsignal S_{ref} der Sensoreinrichtung 4 in einem Referenzzustand des Kurbeltriebs 1 bestimmt wurde. Zum Vergleichen der Signale kann dabei aus dem erfassten aktuellen Spannungssignal auch ein zeitlich gemitteltes maximales Spannungssignal oder ein zeitlich gemittelter Betrag des Spannungssignals ermittelt werden. In Schritt 63 erfolgt dann ein Erkennen von Veränderungen am Betriebsverhalten des Kurbeltriebs 1, insbesondere von Rissen im Kurbeltrieb 1 oder einem Lagerverschleiß, aus dem Vergleich des aktuellen Signals Sₐₖₜ mit dem Referenzsignal S_{ref} der Sensoreinrichtung 4. Falls eine Veränderung erkannt wurde, kann dies einem Nutzer des Kraftfahrzeugs über optische und/oder akustische Signale und/oder eine Meldung im Fehlerspeicher des Fahrzeugs mitgeteilt werden.

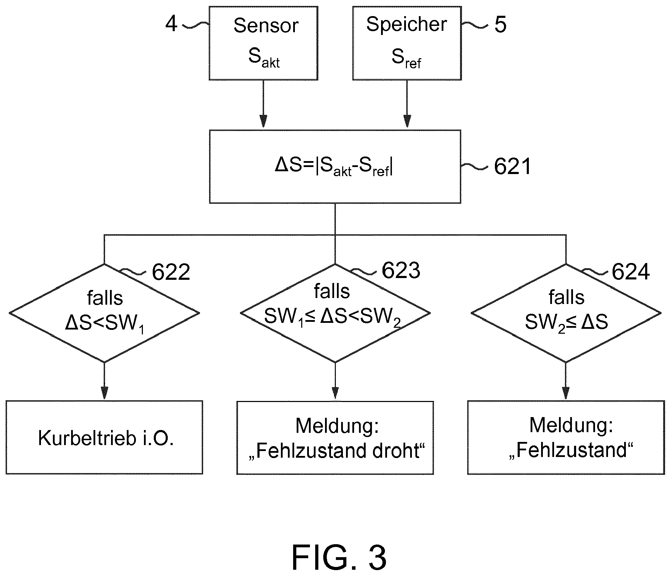

Figur 3 zeigt ein Flussdiagramm eines Verfahrens zum Vergleichen eines aktuellen Signals Sₐₖₜ der Sensoreinrichtung mit einem Referenzsignal S_{ref} entsprechend Schritt 62 in Figur 2 gemäß einer Ausführungsform der Erfindung. Hierzu wird aus dem von der Sensoreinrichtung 4 erfassten aktuellen Signal Sₐₖₜ und aus dem im Speicher 5 hinterlegten Referenzsignal S_{ref} in Schritt 621 die betragsmäßige Differenz ΔS=|Sₐₖₜ - S_{ref}| gebildet. Abhängig vom Wert dieser Größe ΔS im Vergleich zu verschiedenen vorgegebenen Schwellenwerten SW₁ und SW₂, wobei SW₁ < SW₂ gilt, werden verschiedene Operationen ausgeführt. Über die Schwellenwerte wird dabei ein gewisser Bereich definiert, in dem die Lage des Impulsgebers zur Sensoreinrichtung von seiner Solllage abweichen darf. Liegt der Wert von ΔS unterhalb eines ersten Schwellenwerts SW₁ (Schritt 622), so ist der Kurbeltrieb in Ordnung, und mögliche Veränderungen am Betriebsverhalten zu einem Referenzzustand, beispielsweise der Neuzustand des Kurbeltriebs, liegen innerhalb des Toleranzbereichs (SW₁). Falls SW₁ ≤ ΔS < SW₂ gilt, so wird in Schritt 623 die Meldung an den Nutzer ausgegeben, dass ein "Fehlzustand am Kurbeltrieb in naher Zukunft droht". Das heißt, es sind Veränderungen, beispielsweise Verschleißerscheinungen, am Betriebsverhalten des Kurbeltriebs aufgetreten, welche über einem ersten Toleranzbereich (SW₁) liegen, allerdings noch nicht derart gravierend sind, dass ein Fehlzustand, der eine Weiterfahrt verhindert, vorliegt. Dem Nutzer wird damit die Möglichkeit gegeben, entsprechende Vorkehrungen zu treffen oder sein Fahrverhalten zu ändern. Liegt dagegen der Fall vor, das SW₂ ≤ ΔS so wird in Schritt 624 eine Meldung ausgeben, dass ein "Fehlzustand des Kurbeltriebs vorliegt", der eine Weiterfahrt verhindert und einer umgehenden Reparatur bedarf.

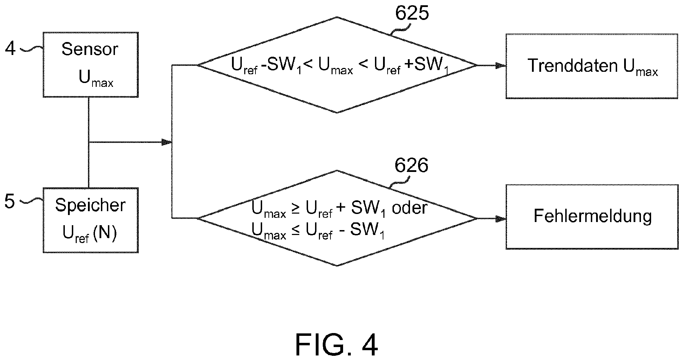

In Figur 4 ist das Vergleichen der Signale gemäß einer weiteren Ausführungsform der Erfindung dargestellt. In diesem Fall handelt es sich um einen zeitlich gemittelten maximalen Spannungssignalwert Uₘₐₓ, welcher kurbelwellendrehzahlabhängig aus dem von der Sensoreinrichtung 4 erfassten aktuellen Signal ermittelt wurde. Im Speicher 5 sind zudem entsprechende Referenzspannungssignalwerte U_{ref} (N) als Funktion der Drehzahl N der Kurbelwelle 2 hinterlegt. Durch den Vergleich des drehzahlabhängigen Spannungssignalwerts Uₘₐₓ mit dem dieser Drehzahlzahl entsprechenden Referenzspannungssignalwert U_{ref} lässt sich wiederum eine mögliche Veränderung am Betriebszustand der Kurbeltriebs 2 bestimmen. Falls nämlich in Schritt 625 festgestellt wird, dass U_{ref}-SW₁< Uₘₐₓ< U_{ref}+SW₁ gilt, so liegt kein Fehlverhalten des Kurbeltriebs 1 vor, d. h., der mittlere Abstand zwischen Impulsgeber 3 und Sensoreinrichtung 4 liegt in einem über den Schwellenwert SW₁ definierten Toleranzbereich. Der ermittelte Spannungssignalwert Uₘₐₓ wird daraufhin im Speicher 5 als Datenpunkt für eine Trenddatenanalyse hinterlegt und kann einem Nutzer auf Anfrage ausgegeben werden. Falls in Schritt 626 allerdings ermittelt wird, dass Uₘₐₓ ≥ U_{ref}+SW₁ oder Uₘₐₓ ≤ U_{ref}-SW₁ gilt, so liegt eine Veränderung am Betriebsverhalten des Kurbeltriebs 1 vor, die außerhalb des Toleranzbereichs liegt. Beispielsweise liegt ein Riss im Kurbeltrieb 1 vor, wodurch sich dessen Schwingungsverhalten und damit der mittlere Abstand zwischen Impulsgeber 3 und Sensoreinrichtung 4 entsprechend geändert hat. Über diesen Fehlzustand des Kurbeltriebs 1 wird ein Nutzer durch eine entsprechende Fehlermeldung informiert.

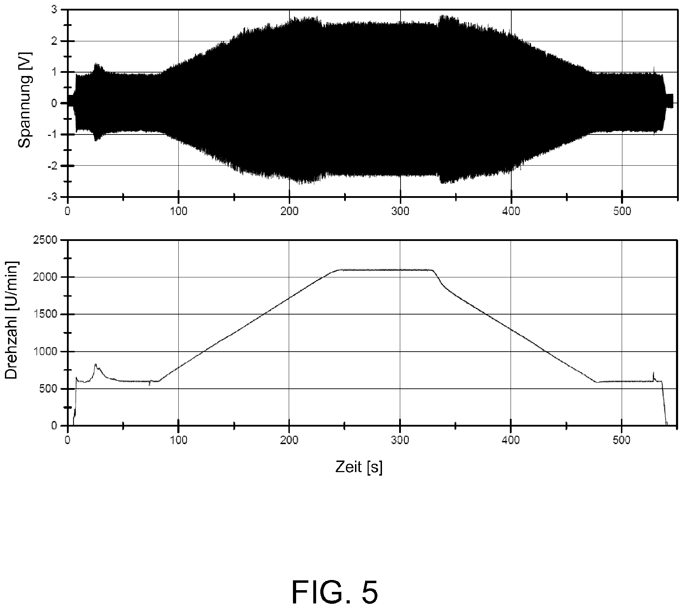

Figur 5 zeigt exemplarisch das Spannungssignal S einer induktiven Sensoreinrichtung 4, das bei verschiedenen Drehzahlen der Kurbelwelle 2 erfasst wurde. Das mit dem Bezugszeichen 41 referenzierte Signal S entspricht dabei dem oszillierenden drehzahlabhängigen Spannungssignal S der Sensoreinrichtung 4, wobei aufgrund der Stauchung des Signals die einzelnen Oszillationen nicht aufgelöst werden können und somit nur die maximalen/minimalen Werte in Form einer einhüllende Kurve abgelesen werden können. Die entsprechenden Spannungswerte sind dabei auf der linken Achse angegeben. Der mit dem Bezugszeichen 42 referenzierte Graph zeigt dabei die entsprechende Drehzahl der Kurbelwelle 2, wobei die Drehzahlwerte auf der rechten Achse angegeben sind. Es zeigt sich, dass die maximale Amplitude des oszillierenden Signals S mit der Drehzahl korreliert. Dieser drehzahlabhängige Signalverlauf 41 ist dabei charakteristisch für eine bestimmte Einbaulage und einen Betriebszustand des Kurbeltriebs 1 und kann somit gemäß dem beanspruchten Verfahren zum Erkennen von Veränderungen am Betriebszustand des Kurbeltriebs 1 verwendet werden. Beispielsweise könnte der in Figur 5 dargestellte drehzahlabhängige Verlauf als Referenzsignal für diesen Referenzzustand des Kurbeltriebs 1 hinterlegt werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Kurbeltrieb
- 2: Kurbelwelle
- 3: Impulsgeber
- 4: Magentische Sensoreinrichtung
- 5: Speicher
- 6: Steuereinrichtung
- 7: Motorblock
- 8: Verbrennungsmotor
- 9: Pleuel
- 10: Kolben
- 11: Torsionsschwingungsdämpfer
- 12: Schwungrad

## Patentansprüche

1. Verfahren zum Erkennen einer Veränderung am Betriebsverhalten eines Kurbeltriebs (1) eines Kraftfahrzeugs, insbesondere zum Erkennen von Rissen im Kurbeltrieb (1) oder eines Lagerverschleißes, wobei der Kurbeltrieb (1) eine Kurbelwelle (2), einen im Betrieb der Kurbelwelle (2) rotierenden Impulsgeber (3) und eine ortsfeste magnetische Sensoreinrichtung (4) umfasst, welche ein von der Drehzahl des Impulsgebers (3) und dem Abstand des Impulsgebers (3) von der Sensoreinrichtung (4) abhängiges Signal S erzeugt, **dadurch gekennzeichnet, dass** das Verfahren folgende Schritte umfasst:
i. Erfassen eines aktuellen Signals Sₐₖₜ der Sensoreinrichtung (4) während des Betriebs des Kurbeltriebs (1), wobei aus dem aktuellen Signals Sₐₖₜ der Sensoreinrichtung (4) ein Maß für den aktuellen Abstand zwischen Impulsgeber (3) und Sensoreinrichtung (4) ableitbar ist,
ii. Vergleichen des aktuellen Signals Sₐₖₜ mit einem in einem Speicher (5) hinterlegten Referenzsignal S_{ref} der Sensoreinrichtung (4), das in einem Referenzzustand des Kurbeltriebs (1) bestimmt wurde, und
iii. Erkennen einer Veränderung am Betriebsverhalten des Kurbeltriebs (1), insbesondere von Rissen im Kurbeltrieb (1) oder einem Lagerverschleißes, aus dem Vergleich des aktuellen Signals Sₐₖₜ mit dem Referenzsignal S_{ref}.

2. Verfahren nach Anspruch 1, **dadurch gekennzeichnet, dass** es sich bei dem von der Sensoreinrichtung (4) erzeugten Signal S um ein Spannungssignal handelt.

3. Verfahren nach Anspruch 2, **dadurch gekennzeichnet, dass** zum Vergleichen der Signale aus dem erfassten aktuellen Signal Sₐₖₜ der Sensoreinrichtung (4) ein zeitlich gemitteltes maximales Spannungssignal oder ein zeitlich gemittelter Betrag des Spannungssignals ermittelt wird.

4. Verfahren nach Anspruch 1, **dadurch gekennzeichnet, dass** zum Vergleichen der Signale das erfasste aktuelle Signal Sₐₖₜ der Sensoreinrichtung (4) einer Filterung unterzogen wird, derart, dass auch nach der Filterung aus dem aktuellen Signal Sₐₖₜ ein Maß für den aktuellen mittleren Abstand zwischen Impulsgeber (3) und Sensoreinrichtung (4) ableitbar ist.

5. Verfahren nach einem der vorherigen Ansprüche, **dadurch gekennzeichnet, dass** basierend auf dem Vergleich des aktuellen Signals Sₐₖₜ mit dem Referenzsignal S_{ref}
a) eine Abweichung des aktuellen Abstands zwischen Impulsgeber (3) und Sensoreinrichtung (4) von einem Abstand zwischen Impulsgeber (3) und Sensoreinrichtung (4) in einem Referenzzustand des Kurbeltriebs (1) und/oder
b) ein Riss im Kurbeltrieb (1) oder ein Lagerverschleiß
erkannt wird.

6. Verfahren nach einem der vorherigen Ansprüche, **dadurch gekennzeichnet, dass** aus dem erfassten aktuellen Signal Sₐₖₜ der Sensoreinrichtung (4) zusätzlich eine Drehzahl der Kurbelwelle (2) ermittelt wird.

7. Verfahren nach einem der vorherigen Ansprüche, **dadurch gekennzeichnet, dass** im Speicher (5) das Referenzsignal S_{ref} der Sensoreinrichtung (4) als Funktion der Drehzahl der Kurbelwelle (2) und/oder des Drehmoments der Kurbelwelle (2) hinterlegt ist und dass das Vergleichen dadurch erfolgt, dass ein bei einer bestimmten Drehzahl und/oder Drehmoment der Kurbelwelle (2) erfasster Signalwert des aktuellen Signals Sₐₖₜ mit einem Referenzsignalwert der entsprechenden Drehzahl und/oder des entsprechenden Drehmoments verglichen wird.

8. Verfahren nach einem der vorherigen Ansprüche, **dadurch gekennzeichnet, dass** das aktuelle Signal Sₐₖₜ der Sensoreinrichtung (4) als Funktion der Drehzahl der Kurbelwelle (2) und/oder des Drehmoments der Kurbelwelle (2) erfasst wird.

9. Verfahren nach einem der vorherigen Ansprüche, **dadurch gekennzeichnet, dass** der Vergleich des aktuellen Signals Sₐₖₜ der Sensoreinrichtung (4) mit dem in dem Speicher (5) hinterlegten Referenzsignal S_{ref} der Sensoreinrichtung (4) durch Bilden einer betragsmäßigen Differenz der beiden Signale ΔS=|Sₐₖₜ - S_{ref}| erfolgt und eine erste Meldung ausgegeben wird, falls die betragsmäßige Differenz der beiden Signale ΔS einen ersten Schwellenwert SW₁ übersteigt.

10. Verfahren nach Anspruch 9, **dadurch gekennzeichnet, dass** eine zweite Meldung ausgegeben wird, falls die betragsmäßige Differenz der beiden Signale ΔS einen zweiten Schwellenwert SW₂ übersteigt, wobei SW₂ > SW₁ gilt.

11. Verfahren nach Anspruch 10, **dadurch gekennzeichnet, dass** die zweite Meldung einen Hinweis gibt, dass aufgrund eines Fehlzustands des Kurbeltriebs (1), insbesondere aufgrund eines Risses im Kurbeltrieb (1) oder eines Lagerverschleißes, eine umgehende Reparatur des Kurbeltriebs (1) erforderlich ist und die erste Meldung einen Hinweis gibt, dass ein derartiger Fehlzustand droht, allerdings keine umgehende Reparatur des Kurbeltriebs (1) erforderlich ist.

12. Verfahren nach einem der vorherigen Ansprüche, **dadurch gekennzeichnet, dass** das Referenzsignal S_{ref} der Sensoreinrichtung (4) für ein bestimmtes Kraftfahrzeug ermittelt wird und im Speicher (5) als fahrzeugspezifisches Referenzsignal S_{ref} hinterlegt wird, oder dass es sich bei dem Referenzsignal S_{ref} der Sensoreinrichtung (4) um ein fahrzeugunspezifisches Referenzsignal S_{ref} der Sensoreinrichtung (4) handelt.

13. Verfahren nach einem der vorherigen Ansprüche, **dadurch gekennzeichnet, dass** das Verfahren zum Erkennen einer Veränderung am Betriebsverhalten eines Kurbeltriebs (1) in regelmäßigen Zeitabständen und/oder bei bestimmten Kilometerständen durchgeführt wird und die so ermittelten aktuellen Signale Sₐₖₜ der Sensoreinrichtung (4) als Trenddaten in einem Speicher (5) gespeichert werden und auf Anfrage von einem Nutzer ausgegeben werden.

14. Verfahren nach einem der vorherigen Ansprüche, **dadurch gekennzeichnet, dass** es sich bei dem Referenzzustand des Kurbeltriebs (1) um einen Neuzustand des Kurbeltriebs (1) kurz nach der Montage des Kurbeltriebs (1), insbesondere nach der Montage der Sensoreinrichtung (4) und des Impulsgebers (3), im Kraftfahrzeug handelt, oder
dass es sich bei dem Referenzzustand um einen Zustand des Kurbeltriebs (1) kurz nach einer Wartung oder Reparatur des Kurbeltriebs (1) handelt.

15. Kraftfahrzeug, insbesondere Nutzfahrzeug, mit einem Kurbeltrieb (1), umfassend eine Kurbelwelle (2), einen im Betrieb der Kurbelwelle (2) rotierenden Impulsgeber (3) und eine ortsfeste magnetische Sensoreinrichtung (4), die ein von der Drehzahl des Impulsgebers (3) und dem Abstand des Impulsgebers (3) von der Sensoreinrichtung (4) abhängiges Signal S erzeugt, und eine Steuereinrichtung (6), die eingerichtet ist, die Signale der Sensoreinrichtung (4) zu empfangen und das Verfahren zum Erkennen einer Veränderung am Betriebsverhalten eines Kurbeltriebs (1) nach einem der vorherigen Ansprüche auszuführen.
